# EUROPÄISCHE PATENTSCHRIFT

(11) **EP 2 537 044 B1**
(45) Veröffentlichungstag und Bekanntmachung des Hinweises auf die Patenterteilung: **17.05.2017**
(21) Anmeldenummer: 11706744.7
(22) Anmeldetag: 15.02.2011
(51) Int. Cl.: G01S 13/86, G01S 13/32, G01S 13/92, G01S 7/03, G01S 13/91, G08G 1/015, G08G 1/02, G08G 1/04, G08G 1/048, G08G 1/052, G08G 1/056, G08G 1/065, G08G 1/14, G01S 13/58

(54) **FAHRBAHNINTEGRIERTER RADARSENSOR**
ROADWAY-INTEGRATED RADAR SENSOR
DÉTECTEUR RADAR INTÉGRÉ DANS LA CHAUSSÉE

(30) Priorität: 01.04.2010 DE 102010013878; 16.02.2010 DE 102010008183
(43) Veröffentlichungstag der Anmeldung: 26.12.2012
(73) Patentinhaber: VOLTRA solutions GmbH, 88085 Langenargen (DE); Niechoj, Bernhard, 88131 Lindau (DE)
(72) Erfinder: NIECHOJ, Bernhard, 88131 Lindau (DE)
(74) Vertreter: Riebling, Peter
(86) Internationale Anmeldenummer: PCT/EP2011/000695
(87) Internationale Veröffentlichungsnummer: WO 2011/101115

(56) Entgegenhaltungen:
- EP-A2- 1 028 404
- WO-A1-2011/043377
- CN-A- 101 639 982
- DE-A1- 19 803 660
- DE-A1-102006 028 625
- DE-U1-202009 012 684
- GB-A- 1 293 881
- GB-A- 2 425 422
- US-A1- 2005 203 697
- US-B1- 7 057 550

## Beschreibung

Gegenstand der Erfindung ist ein fahrbahnintegrierter Radarsensor nach dem Oberbegriff des Patentanspruches 1.

Für die Zählung, Geschwindigkeitsmessung, Längenmessung und Klassifizierung von sich auf Fahrbahnen bewegenden Fahrzeugen ist es bekannt, Fahrzeugsensoren in oder oberhalb der Fahrbahn anzuordnen.

Diese Fahrzeugsensoren werden für die Verkehrsdatenerfassung zum Zweck der Planung von Verkehrswegen, für die Steuerung des Verkehrs (Lichtsignalanlagen und Verkehrsleitsysteme), aber auch in Mautsystemen eingesetzt.

Für zahlreiche Situationen ist es erforderlich, dass ein solcher Fahrzeugsensor in der Fahrbahn angeordnet ist, da an der Stelle an der der Verkehr erfasst werden soll keine bauliche Befestigungsmöglichkeit für Sensoren neben oder über der Fahrbahn vorhanden ist.

Für die Klassifizierung ist es erforderlich die Geschwindigkeit und Länge der Fahrzeuge und weitere Fahrzeuggrößen wie z.B. die Achsabstände messtechnisch zu erfassen um verschiedene Fahrzeugarten unterscheiden zu können. Zur Messung dieser Fahrzeuggrößen sind bisher verschiedene Lösungen bekannt wie z.B. Induktionsschleifen, Magnetfeldsensoren und Piezokabel, die nach dem Prinzip zweier nacheinander überfahrener Messpunkte arbeiten und über das Weg-Zeit-Gesetz der gleichförmigen Bewegung die Geschwindigkeit und dann aus Geschwindigkeit und Aufenthaltsdauer die Länge des überfahrenden Fahrzeuges bestimmen. Dieses Prinzip zur Längenermittlung funktioniert jedoch nur, solange die Fahrzeuge mit konstanter Geschwindigkeit über den Sensor rollen. Ebenfalls bekannt sind Anordnungen mit Dopplerradarsensoren zur Fahrzeugerfassung, jedoch ermöglichen auch diese Anordnungen eine Längenmessung nur bei fließendem Verkehr.

Häufig kommt es im Verkehrsfluss jedoch zum zeitweiligen Stillstand der Fahrzeuge, z.B. bei Stau oder an Lichtsignalanlagen. Zur Erzielung einer hohen Zähl- und Messgenauigkeit ist es daher erforderlich, dass der Meßvorgang auch bei sehr niedrigen Geschwindigkeiten und zeitweilig zum Stillstand kommenden Fahrzeugen mit hoher Genauigkeit funktioniert. Zudem müssen die Fahrzeugsensoren in der Lage sein, auf einer mehrspurigen Straße, die Fahrzeuge jede Einzelspur unabhängig vom Verkehr der Nachbarspur fehlerfrei zu messen. Sollen durch die Meßanordnung auch Geisterfahrer erkannt werden ist zusätzlich die Fahrtrichtung der Fahrzeuge zu ermittlen.

Die DE 10 2004 036 729 A1 offenbart ein in der Fahrbahn eingebautes komprimierbares Piezo-Element auf Polymerbasis, welches bei Druckbeaufschlagung ein Signal abgibt. Nachteil hierbei ist, dass ein solches Piezo-Element nicht geeignet ist, eine genaue Verkehrsdatenerfassung durchzuführen, sobald ein Fahrzeug auf dem Piezo-Element stehen bleibt. Dies ist darin begründet, dass ein Piezosensor ein Fahrzeug nur erfassen kann, wenn eine Achse über den Sensor rollt oder steht. Kommt ein Fahrzeug aber so über dem Sensor zu stehen, dass keine Achse genau auf dem Sensor steht, kann ein Piezo-Element das Fahrzeug nicht mehr erkennen und damit auch keine Längenbestimmung und Klassifizierung durchführen. Ein weiterer Nachteil besteht darin, dass Fahrzeuge mit geringem Abstand nicht von Anhängerfahrzeugen unterschieden werden können und es dadurch insbesondere bei stockendem Verkehr häufig zu fehlerhaften Klassifizierungen der Fahrzeuge kommt.

Mit dem Gegenstand des EP 0866 434 B1 ist ein Messsystem für eine Verkehrsstromanalyse bekannt geworden, bei der auf Brücken oder Masten angeordnete Sensoren das Fahrzeug von oben erkennen sollen. Hiermit besteht jedoch der Nachteil, dass bei Fahrzeugen mit relativ glatten Fahrzeugkonturen, wie z.B. Bussen und Lastzügen, nur ein sehr lückenhaftes und instabiles Signal reflektiert wird. Dies führt dazu, dass Lastzüge oder Busse häufig als zwei Fahrzeuge und mit falscher Länge erfasst werden. Bei stehenden Fahrzeugen ist aus gleichem Grunde ebenfalls keine genaue Längenerfassung möglich, was eine zuverlässige Klassifizierung unmöglich macht. Ein weiterer Grund für eine nur eingeschränkte Messqualität von oben messender Radarsensoren ist, dass ein von oben messendes Radar aufgrund der unterschiedlichen Fahrzeughöhen sehr unterschiedliche Abstände zu den Fahrzeugen aufweist, was ebenfalls zu instabilen Radarsignalen und damit zu einer nur geringen Längenmessgenauigkeit führt.

Mit dem Gegenstand der GB 1 293 881 ist eine einfache Dopplerradaranordnung gezeigt, die aus der Fahrbahn heraus in Richtung auf die Fahrzeugunterseite eines fahrenden Kraftfahrzeuges misst, jedoch ergibt sich hieraus keine Lösung für das Problem von langsam fahrenden und insbesondere zeitweilig stehenden Fahrzeugen. Ein Dopplerradar erzeugt prinzipbedingt nur bei bewegten Objekten ein Ausgangssignal und kann daher nicht unterscheiden, ob sich kein Fahrzeug oder ein stehendes Fahrzeug auf dem Sensor befindet.
Daher ist die Anordnung auf die Messung von sich bewegenden Fahrzeugen beschränkt, und nicht geeignet Fahrzeuge auch in stop-and-go Situationen richtig zu messen.

Bei der genannten britischen Druckschrift wird bei einem zeitweilig auf dem Sensor stehenden Fahrzeug die Messung beendet und beim wieder Anfahren des Fahrzeuges eine neue Messung durchgeführt, so dass ein reales Fahrzeug mehrfach als Fahrzeug gezählt wird. Dieser Effekt tritt verstärkt bei einem auf dem Sensor stehenden Lastzug auf, der dann fälschlicherweise als mehrere PKW gezählt wird.

Bei dem in der britischen Druckschrift gezeigten unmodulierten und damit schmalbandigen Dopplerradar besteht zudem der Nachteil, dass es zu Signalauslöschungen durch Interferenzen von reflektierten Radarsignalen an der Unterseite des Fahrzeuges vorkommen können. Es ist demzufolge nachteilig, ein reines Dopplerradar zur Erfassung einer Fahrzeugkontur von der Unterseite des Fahrzeuges her zu verwenden. Zudem verfügt der beschriebene Radarsensor nicht über eine Erkennung der Fahrtrichtung der zu messenden Fahrzeuge.

Mit dem Gegenstand der WO 2011/003674 A1 wird ein Stellplatz-Management-System für eine Parkeinrichtung beschrieben.

Das Stellplatz-Management-System arbeitet mit einem pulsmodulierten Radarsensor und setzt statisch auf einem Stellplatz abgestellte Fahrzeuge voraus, deren Anwesenheit erfasst werden soll. Es besteht jedoch der Nachteil, dass weder die Länge eines Fahrzeuges, noch die Geschwindigkeit eines darüberfahrenden Fahrzeuges gemessen wird, und demzufolge auch nicht ein Fahrzeugtyp klassifiziert werden kann, wie er z. B. für Mautzwecke klassifiziert werden muss. Der gezeigte Sensor ist daher lediglich für die statische Erkennung von Fahrzeugen geeignet und kann deshalb nicht zur Messung von Geschwindigkeit, Länge und Klassifizierung fahrender oder kurzzeitig stehender Fahrzeuge eingesetzt werden.

Mit dem Gegenstand der JP 2004-085452 A ist ein FMCW-Radarsensor beschrieben, jedoch ohne eine Anwendung in der Verkehrsdatenerfassung.

Mit der GB 2453369 A ist eine aus einem Dopplerradar und einem FMCW-Radarsensor bestehende Anordnung beschrieben, der erhöht seitlich oberhalb einer Fahrbahn angeordnet ist und eine auf die Fahrbahn gerichtete Abstrahlkeule erzeugt. Die beschriebene Anordnung ist jedoch dazu bestimmt Personen zu erkennen und nicht geeignet die Geschwindigkeit und Länge eines vorbei fahrenden Fahrzeuges zu messen oder dieses zu klassifizieren. Eine genaue Zuordnung auf einzelne Fahrzeuge ist durch die Größe der Meßfelder unmöglich, da sich gleichzeitig mehrere Fahrzeuge im Erfassungsbereich der gezeigten Sensoranordung befinden. Ausserdem erfordert die Anordnung einen Mast am Fahrbahnrand.

Bei der US 20050203697 A1 handelt es sich um ein Verkehrsdatenerfassungssystem, welches aus einem Radarsystem und mehreren Induktionsschleifen besteht. Das Radarsystem ist am Fahrbahnrand angeordnet und strahlt von der Seite des Fahrbahnrandes über alle zu erfassenden Spuren. Bei der beschriebenen Anordnung befinden sich bei dichtem Verkehr zeitgleich mehrere Fahrzeuge im Erfassungsbereich des Radarsensors. Dadurch ist eine Zuordnung der Radarmesswerte zu einzelnen Fahrzeugen und damit eine genaue Messung von Geschwindigkeit, Länge und Anwesenheit sowie Fahrzeugklassifizierung von einzelnen Fahrzeugen im dichtem Verkehr und unter stop-and-go Bedingungen nicht möglich.

Aus der Druckschrift CN 101639982 A ergibt sich lediglich, dass ein in der Fahrbahndecke angeordneter Radarsensor einem entfernt davon angeordneten Empfänger (Radarantenne) kommuniziert. Es wird weder der Abstand zu einem Fahrzeugboden erfasst, noch ist es mit einer solchen Anordnung möglich, ein stehendes Fahrzeug zu erfassen und beispielsweise den Abstand zwischen dem stationären Radarsensor und dem Fahrzeugunterboden zu erkennen.

Aus der Druckschrift GB 2 425 422 A lässt sich lediglich frequenzmodulierter Radar entnehmen, der gegen eine Fahrbahnoberfläche gerichtet ist und der seitlich über die Fahrbahn misst und gerade nicht in der Fahrbahndecke eingebaut ist. Deshalb ist es mit einer solchen Anordnung auch nicht möglich, die Entfernungsmessung bezüglich des Abstandes zwischen einem in der Fahrbahndecke angeordneten Radarsensor und dem Fahrzeugunterboden zu bewerkstelligen.

Die gleiche Kritik gilt auch für die DE 198 03 660 A1, weil dort lediglich eine Radar-Sensorvorrichtung zur Erfassung des Abstandes und/oder der Geschwindigkeit eines Objektes relativ zur Sensorvorrichtung beschrieben ist. Diese Sensorvorrichtung ist jedoch nicht stationär in der Fahrbahndecke eingebaut und ist nicht gegen den Unterboden eines darüberfahrenden Fahrzeuges gerichtet.

Der vorliegenden Erfindung liegt deshalb die Aufgabe zugrunde, ein Verfahren und eine Vorrichtung zur Verkehrsdatenerfassung und zur Fahrzeugerfassung der eingangs genannten Art so weiterzubilden, dass eine genaue Erfassung, Geschwindigkeitsmessung, Längenmessung, Klassifizierung und Richtungserkennung von Fahrzeugen unter allen vorkommenden Verkehrssituationen, insbesondere auch bei stockendem Verkehr, Stau oder auf Parkplätzen, mittels einer in die Fahrbahn integrierten Meßanordnung erreicht wird.

Zur Lösung der gestellten Aufgabe ist die Erfindung durch die technische Lehre des Anspruches 1 und des Anspruches 11 gekennzeichnet.

Unter dem Begriff der "versenkten Anordnung" in der Fahrbahndecke wird jegliche durch das Fahrzeug überfahrbare Anordnung eines oder mehrerer Radarsensoren verstanden.Die Messung des Abstandes zu einem über der Meßanordnung stehenden Fahrzeuge wird durch die Modulation des Radarsignals erreicht.

Die Erfindung sieht daher allgemein die Verwendung eines von unten messenden modulierten Radarsensors vor.

Am Beispiel einer speziellen Ausführung - nämlich die Anwendung eines FMCW-Radar wird die entfernungsmessende Wirkungsweise erläutert.

Ein FMCW-Radar ist ein frequenzmoduliertes Dauerstrichradar. Ein solcher Zeitbezug zur Messung der Entfernung unbewegter Objekte wird mit Hilfe einer Frequenzmodulation erzeugt werden. Bei dieser Methode wird ein Signal ausgesendet, welches sich ständig in der Frequenz ändert. Um den Frequenzbereich zu begrenzen und die Auswertung zu erleichtern, wird eine periodische, linear auf- und absteigende Frequenz verwendet. Der Betrag der Änderungsrate df/dt ist dabei konstant.

Wird ein Echosignal empfangen, dann hat dieses eine Laufzeitverschiebung Delta t wie beim Pulsradar und somit eine abweichende Frequenz. Nun kann durch Frequenzvergleich die Entfernung ermittelt werden. Bei einem Modulationsverlauf wie im Diagramm oben entsteht eine konstante Differenzfrequenz fD, die ein direktes Maß für die Entfernung ist.

Im einfachen Fall wird nur eine Sägezahn- oder Dreiecksform der Modulation gewählt, die zwar keinen eindeutigen Messbereich hat, jedoch so langsam erfolgt, dass der Bereich der maximalen Messentfernung nicht überschritten wird. Es ist möglich, durch bestimmte Frequenzmuster zu erreichen, dass keine mehrdeutigen Echos zu erwarten sind. Außerdem ist es möglich durch eine entsprechend ausgebildete Modulation und Signalverarbeitung gleichzeitig den Abstand und die Geschwindigkeit des zu messende Objektes zu bestimmen.

Die Erfindung sieht jedoch auch anders modulierte Radarsensoren vor, insbesondere puls- oder phasenmodulierte Radarsensoren.

Durch die Verwendung eines von unten messenden Radarsensors mit einem modulierten Radarsignal wird es erstmals ermöglicht, nicht nur sich bewegende Objekte zu erkennen, wie dies bei einem Dopplerradar möglich ist, sondern zusätzlich auch eine Abstandsmessung zwischen Radarbaugruppe und Fahrzeugunterseite durchzuführen. Es ist somit möglich Geschwindigkeit und Entfernung eines über dem Sensor befindlichen Fahrzeugs mit einer einzigen Meßeinrichtung zu ermitteln. Diese zusätzliche Abstandinformation kann dazu verwendet werden die Anwesenheit eines Fahrzeugs zu erkennen, aber auch, um die Bodenhöhe des Fahrzeuges zu ermitteln und zur Klassifizierung zu verwenden

Wesentliches Merkmal der Erfindung ist, dass durch die Verwendung eines modulierten Radarsensors nunmehr erstmals die Möglichkeit besteht, die Geschwindigkeit, Länge und statische Anwesenheit sowie die Klassifizierung eines zeitweise stehenden oder langsam und ungleichförmig fahrenden Fahrzeuges mit einem einzigen Sensor zu erfassen.

Die Verwendung eines Dopplerradars wäre für die Lösung der gestellten Aufgabe nicht geeignet, weil dies ein bewegtes Fahrzeug voraussetzt. Hier setzt die Erfindung ein, die stattdessen ein moduliertes Radarsignal vorsieht, um auch zeitweilig stehende Fahrzeuge korrekt zu erfassen, wie dies beispielsweise in Stop-and-go-Situationen vorkommt.

Als weitere Funktion kann mittels einer so genannten 2-Kanal-Mischstufe zusätzlich die Bewegungsrichtung der Fahrzeuge erfasst werden.
Dies ist für die Erkennung von Geisterfahrern bedeutsam.

Zum Verständnis soll der Ablauf einer Messung bei einem zeitweilig stehenden Fahrzeug erläutert werden. Wenn ein Fahrzeug mit der Länge L nun mit der Geschwindigkeit v1 auf den Sensor auffährt wird die Geschwindigkeit v1 gemessen und die Zeit T1 bestimmt. T1 ist die Zeitdauer mit der sich das Fahrzeug mit der Geschwindigkeit v1 bewegt. Wenn das Fahrzeug nun auf dem Sensor zum stehen kommt wird die gemessene Geschwindigkeit v2=0. Ein Dopplerradar, das nur bewegte Objekte messen kann, würde nun die Messung beenden, da dieses nicht in der Lage wäre das immer noch auf dem Sensor stehende Fahrzeug zu erkennen. Anders aber der hier vorgestellte modulierte Radarsensor, der durch die permanente Abstandsmessung zur Unterseite des Fahrzeugs auch im stehenden Fall erkennt, dass sich das Fahrzeug noch auf dem Radarsensor befindet und dadurch den Messzyklus aufrechterhält. Die interne Signalverarbeitung bestimmt nun auch die Stillstandsdauer T2 des Fahrzeuges. Nach dieser Zeit verlässt das Fahrzeug mit der Geschwindigkeit v3 den Sensor. Die dafür benötigte Zeitdauer ist T3. Nach erfolgter Überfahrt kann die Signalverarbeitung nun die richtige Gesamtlänge mit L = v1xT1 + v2xT2 + v3xT3 berechnen. Gleiches gilt für die mittlere Geschwindigkeit während der Messung mit v = L/Tges wobei Tges die Summe der Einzelzeiten also Tges= T1+T2+T3+... ist.

In einer ersten Ausführung ist die Oberfläche der Radarsensor-Einheit flächenbündig mit der Oberkante der Fahrbahndecke angeordnet.

In einer zweiten Ausführung ist die Oberfläche (=Oberkante) der Radarsensor-Einheit geringfügig oberhalb der Oberkante der Fahrbahndecke angeordnet und steht beispielsweise um einen Betrag von 10 mm über die Oberkante der Fahrbahndecke hinaus.

In einer dritten Ausgestaltung ist die Radarsensor-Einheit unterhalb der Oberkante der Fahrbahndecke versenkt angeordnet. Und kann beispielsweise 10 mm unter der Oberkante der Fahrbahndecke eingebaut sein.

Im letzt genannten Ausführungsbeispiel kann es auch vorgesehen sein, die Radarsensor-Einheit in den Unterbau der Fahrbahndecke zu integrieren. Das heißt, dass der Radarstrahl die Fahrbahndecke von unten durchdringt. In diesem Fall ist somit die Oberseite der Radarsensor-Einheit von der Fahrbahndecke abgedeckt.

In diesem Fall ist sogar eine Auswechslung der Radarsensor-Einheit möglich, wenn man unterhalb der Fahrbahndecke ein quer zur Fahrrichtung verlaufendes Kunststoffrohr einbaut, welches von der Fahrbahndecke überdeckt ist und in das von der Seite her die Radarsensor-Einheit eingeschoben werden kann. Sie ist damit auswechselbar in den Fahrbahnaufbau integriert.

Die Fahrzeugunterseite stellt im Vergleich zu allen anderen Fahrzeugseiten aufgrund vorhandener Vertiefungen und Kanten ein besonders geeignetes Radarreflexionsziel dar. Durch eine numerische Integration des kontinuierlich vorliegenden Geschwindigkeitssignals in der im Radarsensor befindlichen Signalverarbeitung kann mittels der vorgestellten Erfindung eine Fahrzeuglängenmessung auch bei nicht konstantem Geschwindigkeitsverlauf und bei vorübergehend stehenden Fahrzeugen durchgeführt werden.

Damit werden erstmals eine hochgenaue Verkehrserfassung und Klassifizierung der Fahrzeuge bei stockendem Verkehr und in Stausituationen möglich.

Im Folgenden sollen mehrere Ausführungsformen bzw. Kombinationen für fahrbahnintegrierte Radarsensoren aufgezeigt werden:
- ein frequenzmoduliertes Dauerstrichradar (FMCW) zur Messung der Geschwindigkeit, Länge, statischen Anwesenheit und Fahrtrichtung der überfahrenden Fahrzeuge
- ein Radarsensor mit beliebigem Modulationsverfahren zur Messung der Geschwindigkeit, Länge, statischen Anwesenheit und Fahrtrichtung der überfahrenden Fahrzeuge
- ein Dauerstrich-Radarsensor im schrägen Winkel von 0-80° vorzugsweise 30° und ein FMCW im Winkel von 0° senkrecht zur Fahrbahn (beide in einem Gehäuse in der Fahrbahn)
- ein fahrbahnintegrierter Dauerstrich-Radarsensor (continuous wave - CW) zur Messung von Geschwindigkeit und Länge bei fahrenden Fahrzeugen mit beliebiger, auch ungleichförmiger Geschwindigkeit
- ein fahrbahnintegrierter Radarsensor und zusätzlichem seitlich oder oberhalb des Fahrzeugs angeordneten Abstandssensors - entweder optisch (Laser/IR) oder Ultraschall - zur Messung der Geschwindigkeit, Länge, statischen Anwesenheit und des Seiten- oder Höhenprofiles der überfahrenden Fahrzeuge.

Bei allen Ausführungsformen ermöglicht die integrierte Signalverarbeitung im Sensorgehäuse eine einfache Datenschnittstelle nach außen.

Alle Radarbaugruppen können in Hohlleitertechnik jedoch vorzugsweise in Planartechnik aufgebaut sein.

Beim Stand der Technik ergeben sich bei der Messung der Fahrzeugunterseite Schwierigkeiten durch die Vibrationen des Antriebsmotors und anderer Anbauteile des Fahrzeuges. Diese führen dazu, dass ein reiner Dopplerradarsensor auch bei stehenden Fahrzeugen eine Bewegung messen würde, da für ein Dopplerradar die vorliegenden Vibrationen nicht von einer eindirektionalen Fahrzeugbewegung unterscheidbar sind. Dieses Problem wird bei der vorgestellten Erfindung durch die Verwendung einer richtungserkennenden 2-Kanal-Mischstufe, auch Inphase/Quadratur-Mischstufe genannt, gelöst.

Bei diesem Radarverfahren zur Erkennung der Bewegungsrichtung wird eine zweite Mischstufe dazu verwendet, ein zweites, gegenüber der ersten Mischstufe phasenverschobenes, Dopplersignal zu erzeugen. Die Phasenverschiebung zwischen den beiden Mischsignalen gibt dabei eindeutig die erkannte Bewegungsrichtung an. Während die gerichtete Fahrzeugbewegung immer eine eindeutige Phasenlage ausgibt, findet bei Vibrationen ein ständiger Wechsel der Phasenlage mit der Vibrationsfrequenz statt.
Über diese zusätzliche Information ist es möglich die Fahrzeugvibrationen von gerichteten Bewegungsanteilen zu unterscheiden und die Vibrationen als Störsignal vollständig zu unterdrücken. Die vorgeschlagene 2-Kanal-Mischstufe wird ebenfalls dazu verwendet die Fahrtrichtung der Fahrzeuge zu bestimmen.

Aus dem Stand der Technik sind zahlreiche Messmethoden wie z.B. flache Zählgeräte auf Magnetfeldbasis bekannt, die für temporäre und mobile Messungen auf die Fahrbahn genagelt oder geschraubt werden.
Bei der vorliegenden Erfindung ist durch planare Radarmodule eine sehr flache Bauweise (2-3 cm Dicke) erreichbar. Dies ermöglicht eine Anordnung, die als flache plattenförmige Anordnung auf die Fahrbahn aufgebracht wird, um temporäre Verkehrdaten zu erfassen.

In einer weiteren bevorzugten Ausführungsform werden ein bzw. zwei druckempfindliche Sensorkabel zur Achszählung in oder auf der Fahrbahn verlegt. Als Sensorkabel können Piezokabel, Lichtwellenleitersensoren oder andere druckempfindliche linienförmige Sensoren verwendet werden.
Durch die Kombination des Radarsensors mit druckempfindlichen Sensorkabeln ist erstmals eine genaue Messung der Achsabstände bei zeitweilig stehenden Fahrzeugen möglich. Dies ermöglicht eine exakte Klassifizierung in bis zu 10 unterschiedliche Fahrzeugklassen.

Eine weitere Ausgestaltung ist die Kombination des beschriebenen fahrbahnintegrierten Radarsensors mit in der Fahrbahn integrierten Gewichtssensoren. Damit können erstmalig geschwindigkeitsunabhängig die Fahrzeuglänge und die Achslasten und das Gesamtgewicht mit einer einzigen in der Fahrbahn integrierten Messanordnung messtechnisch ermittelt werden. Aufgrund seiner Robustheit und Unempfindlichkeit gegen Witterungseinflüsse kann die beschriebene Anordnung auch sehr vorteilhaft eingesetzt werden um die Ermittlung der Belegung von Parkplätzen aus dem Boden heraus zu detektieren und weiterzumelden.

In einer weiteren vorteilhaften Ausgestaltung könnte die vorgestellte Erfindung mit zusätzlichen Sensoren zur Erfassung von Niederschlag (Schnee/Regen), Feuchtigkeit, Temperatur oder Salzgehalt ausgestattet werden.
Dadurch ließe sich mit nur einem einzelnen Gerät eine Vielzahl von für die Verkehrssteuerung wichtigen Daten erfassen.

Mit der erfindungsgemäßen technischen Lehre ergibt sich der wesentliche Vorteil, dass neben der günstigen Reflektion des Radarsignals an dem zerklüfteten Untergrund des Fahrzeuges sich gleichzeitig der Vorteil ergibt, dass ein sehr konstanter Abstand zwischen dem Fahrzeugunterbau und dem Radargehäuse eingehalten wird, welcher nicht von der Dachhöhe des Fahrzeuges abhängig ist, wie es bei Überkopf-Radarsensoren der Fall ist.

Damit ergibt sich eine besonders günstige und genaue Auswertung des Radarsignals.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert in Seitenansicht ein Fahrzeug, welches gerade einen erfindungsgemäßen Radarsensor überfährt
- Figur 2:: der Radarsensor nach Figur 1 in vergrößerter Darstellung
- Figur 3:: der Radarsensor nach Figur 2 in weiterer vergrößerter Darstellung mit Darstellung weiterer Einzelheiten
- Figur 4:: eine erste Abwandlung eines Radarsensors
- Figur 5:: eine zweite Abwandlung eines Radarsensors
- Figur 6:: der Radarsensor in der Ausführung nach Figuren 2 und 3
- Figur 7:: Darstellung eines abgewandelten Ausführungsbeispiels, bei dem eine seitliche Erfassung des Fahrzeuges noch zusätzlich stattfindet
- Figur 8:: die Kombination von Radarsensoren, die in der Fahrbahn eingebaut sind in Verbindung mit druckempfindlichen Sensorkabeln
- Figur 9:: Draufsicht auf einen Parkplatz mit Anordnung von Radarsensor-Einheiten in den Stellplätzen
- Figur 10:: Schnitt durch einen Stellplatz nach Figur 9

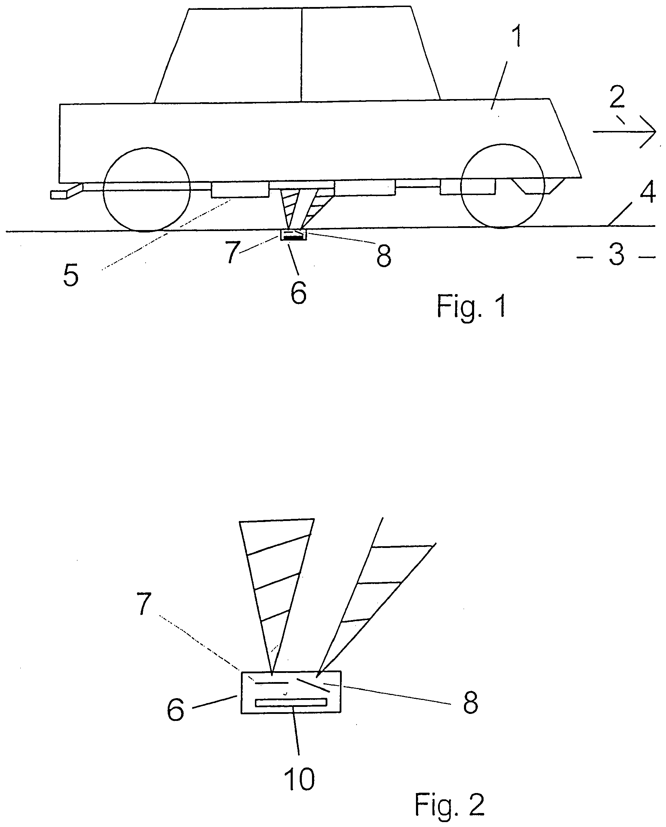

In Figur 1 ist allgemein ein Fahrzeug 1 dargestellt, welches im gezeigten Ausführungsbeispiel als Personenkraftwagen ausgebildet ist. Hierauf ist die Erfindung nicht beschränkt. Es können beliebige Fahrzeuge vorhanden sein, wie z. B. Lastkraftwagen, PKW, Nutzfahrzeuge, Busse, Lieferfahrzeuge und dergleichen. Es können auch Fahrzeuge mit Anhänger oder mit Sattelauflieger oder dergleichen Fahrzeuge vorgesehen werden. Es handelt sich also nur um ein vereinfachtes Ausführungsbeispiel, aus dem sich ergibt, dass das Fahrzeug 1 in Pfeilrichtung 2 den in der Fahrbahnoberseite 4 vertieft in der Fahrbahn 3 eingebauten Radarsensor 6 überfährt.

Im gezeigten Ausführungsbeispiel besteht der Radarsensor 6 aus zwei unterschiedlichen Radaranordnungen, nämlich aus einem FMCW-Radar 7, welcher einen bevorzugt vertikal nach oben gegen den Unterbau gerichteten Radarstrahl 11 ausbildet und ferner aus einem schräg nach vorne gerichteten CW-Radar 8, welcher einen Radarstrahl 12 schräg nach vorne gegen den Unterboden 5 des Fahrzeuges 1 richtet.

Mit der Anordnung von zwei verschiedenen Radaranordnungen 7, 8 besteht der Vorteil, dass sowohl die Geschwindigkeit als auch die Anwesenheit des Fahrzeuges erfasst werden kann. Das schräg nach vorn gerichtete CW-Radar 8 erfasst die Geschwindigkeit und der senkrecht nach oben gerichtete FMCW-Radar 7 erfasst die Anwesenheit des Fahrzeuges.

Dies führt zu dem Vorteil, dass selbst wenn ein Fahrzeug 1 auf dem Radarsensor 6 stehen bleibt, der nach vorne gerichtete CW-Radar 8 keine Geschwindigkeit mehr detektiert, der FMCW-Radar 7 aber noch ein Signal empfängt. Dadurch besteht der Vorteil, dass ein Fahrzeug 1 beliebig lang im Standbetrieb auf dem Radarsensor 6 detektiert werden kann und es zu keiner Fehlmessung kommt, wie es bei üblichen Überkopf-Radaranordnungen der Fall ist.

Dieses ungewünschte Verhalten entsteht im Übrigen bei Induktionsschleifen, weil, wenn ein Fahrzeug im Bereich einer Induktionsschleife stehen bleibt dieser Zustand nicht beliebig lange erkannt werden kann und zudem dann keine Bestimmung der Geschwindigkeit möglich ist. Dadurch ist eine zuverlässige Klassifizierung durch Induktionsschleifen bei stockendem oder stehendem Verkehr nicht möglich.

Gemäß Figur 2 ist dargestellt, dass der Radarsensor 6 in einem die gesamte Anordnung umschließenden Gehäuse 9 angeordnet ist, wobei dieses Gehäuse 9 wasserdicht sein muss.

Es muss auch in der Lage sein, eine Überfahrung mit einem Reifen auszuhalten, d. h. es muss eine entsprechende Druckbelastung von oben standhalten.

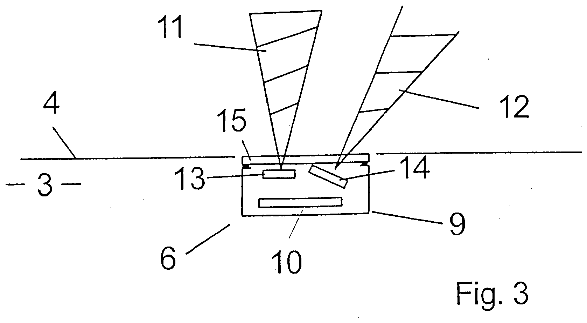

Im gezeigten Ausführungsbeispiel besteht das Gehäuse 9 bevorzugt aus einem Metallgehäuse, welches nach oben durch eine Kunststoff-Abdeckung 15 (siehe Figur 3) abgedeckt ist.

Anhand der Figur 3 werden weitere Einzelheiten der Figur 2 erläutert.

Hier ist erkennbar, dass das Gehäuse 9 in einer Ausnehmung in der Fahrbahn 3 eingebaut ist und die Kunststoffabdeckung 15 mit ihrer Oberseite etwa bündig zur Fahrbahnoberseite 4 ausgerichtet ist.

Im Gehäuse sind zwei planare Module 13, 14 für die jeweils zugeordneten Radaranordnungen 7, 8 vorgesehen.

Eine Signalverarbeitung 10 verarbeitet die Signale der beiden Radaranordnungen 7, 8.

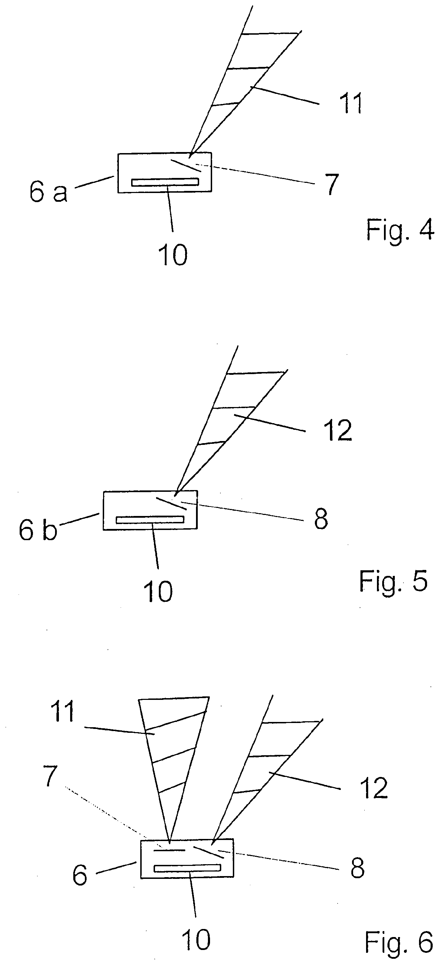

Die Figuren 4 und 5 zeigen, dass es nicht lösungsnotwendig ist, zwei Radaranordnungen 7, 8 mit zugeordneten Radarstrahlen 11, 12 vorzusehen. Die Figur 4 zeigt, dass es auch ausreicht, einen Radarsensor 6a mit nur einem schräg nach vorne und oben gerichteten FMCW-Radar 7 und einen dementsprechenden Radarstrahl 11 vorzusehen.

In gleicher Weise zeigt die Figur 5, dass es als Lösung vorgesehen ist, statt eines schräg nach vorne und oben gerichteten FMCW-Radars 11 ein CW-Radar 8 mit einem dementsprechend schräg nach oben gerichteten Radarstrahl 12 zu verwenden.

Die Figur 6 zeigt wiederum die Kombination der beiden Anordnungen nach Figuren 4 und 5 und entsprechender Ausbildung des Sensors 6 nach Figur 3.

Diese Anordnung bietet nämlich den Vorteil, dass auch bei geringen Abstand zwischen zwei Fahrzeugen genau gemessen werden kann, weil der senkrecht nach oben gerichtete Radarstrahl 11 eine sehr genaue geometrisch Trennung ermöglicht und damit auch dicht auffahrende Fahrzeuge, die den Sensor 6 überfahren, genau detektiert werden können.

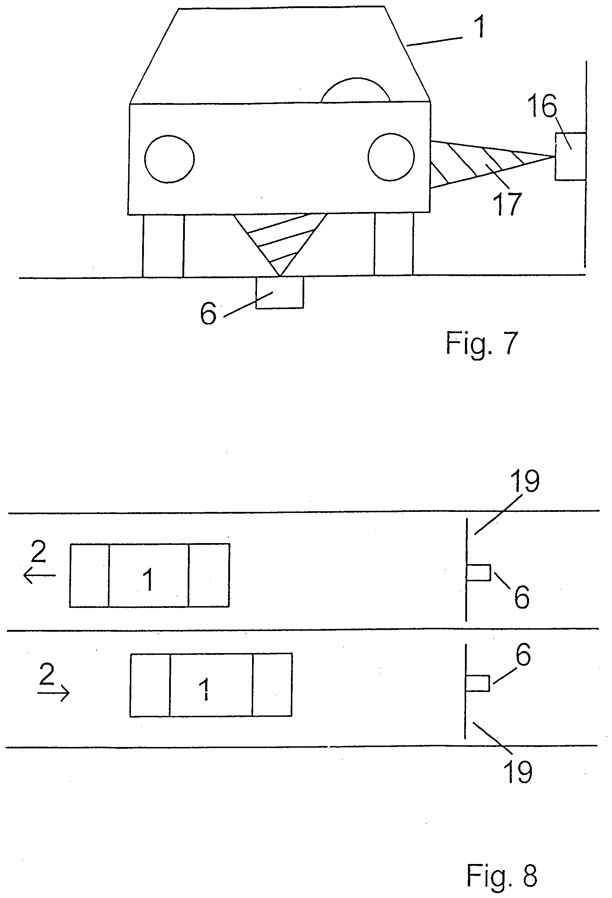

In Figur 7 ist als zusätzliche Ausführungsform dargestellt, dass der gesamten vorher beschriebenen Radarsensor-Anordnung 6 auch ein Abstandssensor 16 zugeordnet werden kann, der einen Strahl 17 gegen die Seitenfläche des Fahrzeuges lenkt. Bei dem Abstandssensor handelt es sich um einen entfernungsmessenden Ultraschall- oder Lasersensor, der auch als Laserscanner ausgeführt sein kann. Ebenso kann es vorgesehen sein, dass der Abstandssensor 16 als zusätzlicher Radarsensor ausgebildet ist.

Der Radarsensor 6 ist mit dem Abstandssensor 16 synchronisiert. Der Abstandssensor 16 stellt die statische Anwesenheit des Fahrzeuges auf dem Radarsensor 6 fest, und der schräg nach vorne gerichtete Radarstrahl 11 oder 12 sieht dann schräg nach vorne gegen den Unterboden 5 des Fahrzeuges.

Bei Einzelspuren, wie diese z.B. an Mautstationen vorkommen, können auch beidseitig Abstandssensoren verwendet werden, wodurch es möglich ist zusätzlich die Fahrzeugbreite zu messen. Der Abstandsensor kann auch über dem Fahrzeug angeordnet sein. Mit dieser Anordnung ist es möglich die Fahrzeughöhe oder ein Höhenprofil der Fahrzeuge zu messen.

Die Figur 8 zeigt eine Einbausituation in einer Fahrbahn, auf der mehrere Fahrzeuge jeweils in Gegenrichtung verkehren, wobei die Fahrbahnoberseite 4 beispielsweise durch einen Mittelstreifen 18 abgeteilt ist, um so zwei Fahrbahnen zu bilden. In jeder Fahrbahn ist der erfindungsgemäße Radarsensor 6 angeordnet, und dem Radarsensor 6 zugeordnet ist jeweils ein druckempfindliches Sensorkabel 19, welches sich senkrecht zum Mittelstreifen 18 erstreckt und sich bevorzugt über die gesamte Breite der Fahrbahn 3 erstreckt.

In einer anderen Ausgestaltung kann es jedoch auch vorgesehen sein, dass das Sensorkabel 19 halbiert ist und sich beispielsweise nur über die Hälfte der jeweiligen Fahrbahn-Oberseite 4 erstreckt.

Die Kombination eines Sensorkabels 19 mit dem erfindungsgemäßen Radarsensor 6 hat den Vorteil, dass man beim Überfahren die Anzahl der Achsen eines Fahrzeuges feststellen kann, was für eine Mauterfassung wichtig ist. Gleichzeitig können durch die Abfrage der Sensorkabel auch die Achsabstände des Fahrzeuges abgefragt werden, was für eine weitergehende Klassifizierung der Fahrzeuge wichtig ist. Dadurch können zahlreich verschiedene Fahrzeugarten unterschieden werden.

Durch die programmierbare, mit einem Mikroprozessor ausgestattete Signalverarbeitung 10 kann das Klassifizierungsschema an vorgegebene Standards wie z.B. die deutsche Richtlinie TLS der Bundesanstalt für Strassenwesen, die 8 Fahrzeugarten unterscheidet oder den schweizer Swiss10 Standard, der 10 Fahrzeugarten unterscheidet, angepaßt werden.

Als Fahrzeugarten können somit z.B: Krad, PKW, Lieferfahrzeuge, LKW, PKW+Anhänger, LKW+Anhänger, Lastzüge und Busse aber auch weitere Fahrzeugarten unterschieden werden.

Alle diese Fahrzeugklassen können unter beliebigen Verkehrbedingungen, also auch bei stockendem Verkehr und Stau mit dem neuartigen fahrbahnintegrierten Radarsensor erfasst werden, was bisher nicht möglich war.

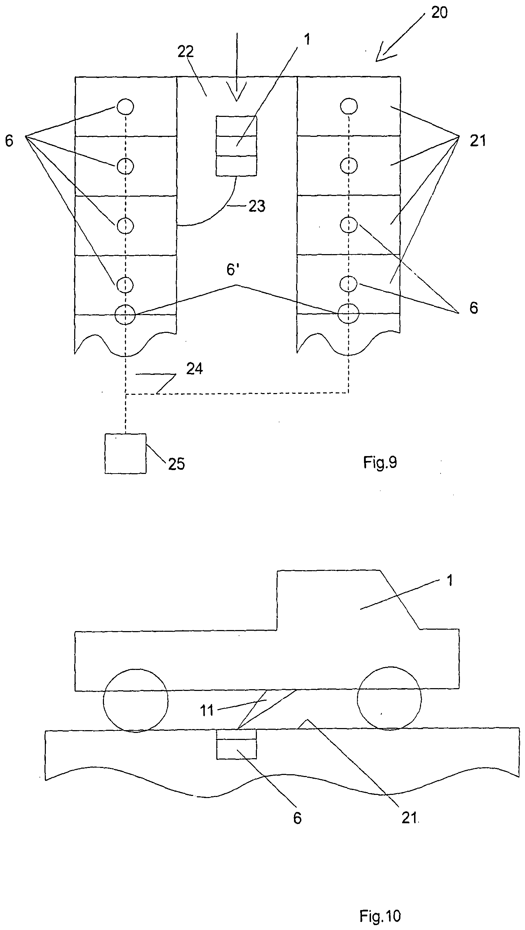

In Figur 9 ist die Draufsicht auf einen Parkplatz 20 dargestellt, auf dem eine Reihe von Stellplätzen 21 angeordnet sind, die über eine Fahrgasse 22 von einem sich in Pfeilrichtung 23 bewegenden Fahrzeug 1 angesteuert werden können. In einer bevorzugten Ausgestaltung ist jedem Stellplatz 21 ein Radarsensor 6 zugeordnet, der bevorzug mit einem Radarstrahl 11 arbeitet und bevorzugt schräg gegen die Unterseite des Fahrzeuges 1 gemäß Figur 10 gerichtet ist.

Er kann jedoch auch senkrecht zur Ebene des Unterbodens gegen das Fahrzeug 1 gerichtet sein. Alle Radarsensoren sind durch einen Signal- und Datenbus miteinander verbunden und an einer Auswerteeinheit 25 angeschlossen. Diese fasst die Belegungsinformationen der einzelnen Radarsensoren 6 zusammen und meldet sie an eine Zentrale weiter. Diese Zentrale kann die Anzahl und Position der freien Plätze über eine Anzeigeneinheit den parkplatzsuchenden Fahrern anzeigen. Dies entspricht einer Parkraum-Bewirtschaftung.

Statt der Zuordnung eines Radarsensor 6 zu jedem einzelnen Stellplatz 21, ist es in einer Weiterbildung möglich einen Radarsensor 6' als Zweistrahlsensor auszubilden und diesen gemäß Figur 9 auf die Grenzlinie zwischen zwei Stellplätze 21 zu positionieren. Der eine Strahl erfasst somit ein Fahrzeug auf dem einen Stellplatz, während der andere Strahl des gleichen Sensors 6' das Fahrzeug auf dem benachbarten Stellplatz 21 erfasst.

Der dargestellte Parkplatz 20 kann unter freiem Himmel sein, denn die erfindungsgemäßen Radarsensoren 6, 6a, 6b, 6' sind unempfindlich gegen (elektromagnetische und magnetische) Störungen und Witterungseinflüsse (Wind, Schnee, Regen).

### Zeichnungslegende

- 1: Fahrzeug
- 2: Pfeilrichtung
- 3: Fahrbahn
- 4: Fahrbahn-Oberseite
- 5: Unterboden
- 6: Radarsensor a, b
- 7: FMCW-Radar
- 8: CW-Radar
- 9: Gehäuse
- 10: Signalverarbeitung
- 11: Radarstrahl (von 7)
- 12: Radarstrahl (von 8)
- 13: Planares Modul
- 14: Planares Modul
- 15: Kunststoff-Abdeckung
- 16: Abstandssensor
- 17: Strahl
- 18: Mittelstreifen
- 19: druckempfindliches Sensorkabel
- 20: Parkplatz
- 21: Stellplatz
- 22: Fahrgasse
- 23: Pfeilrichtung
- 24: Signal- und Datenbus
- 25: Auswerteeinheit

## Patentansprüche

1. Vorrichtung zum Erfassen von Verkehrsinformationen mit mindestens einer in der Fahrbahn (3) versenkt angeordneten Sensoreinrichtung, wobei die Sensoreinrichtung gegen den Unterboden (5) eines Fahrzeuges (1) gerichtet ist und als ein geschwindigkeits- und entfernungsmessender Radarsensor (6, 7, 8) ausgebildet ist, wobei der Radarsensor (6, 7, 8) die Geschwindigkeit des Fahrzeuges (1) detektiert, **dadurch gekennzeichnet, dass** der Radarsensor (6, 7, 8) zur zusätzlichen Erfassung des Fahrzeuges (1) modulierte Signale aussendet und eine Entfernungsmessung zwischen dem Radarsensor und dem Fahrzeugunterboden (5) durchführt.

2. Vorrichtung nach Anspruch 1, **dadurch gekennzeichnet, dass** die Vorrichtung zur Erfassung der Geschwindigkeit und/oder Länge und/oder statischen Anwesenheit und/oder Fahrtrichtung eines langsam fahrenden oder stehenden Fahrzeuges geeignet ist.

3. Vorrichtung nach Anspruch 1 oder 2, **dadurch gekennzeichnet, dass** die Sensoreinrichtung als FMCW-Radarsensor (7) ausgebildet ist.

4. Vorrichtung nach einem der Ansprüche 1 bis 3, **dadurch gekennzeichnet, dass** der Radarsensor (7) phasen- und/oder puls- und/oder frequenzmoduliert ist.

5. Vorrichtung nach einem der Ansprüche 1 bis 4, **dadurch gekennzeichnet, dass** die Vorrichtung einen fahrbahnintegrierten Radarsensor (6, 7, 8) und zusätzlich seitlich oder oberhalb des Fahrzeugs mindestens einen angeordneten Abstandssensors (16) aufweist.

6. Vorrichtung nach einem der Ansprüche 1 bis 5, **dadurch gekennzeichnet, dass** die Sensoreinrichtung aus einer Kombination aus einem CW-Radarsensor (8) und einem FMCW-Radarsensor (7) besteht.

7. Vorrichtung nach einem der Ansprüche 1 bis 6, **dadurch gekennzeichnet, dass** in einem Gehäuse (9) eine Signalverarbeitungseinheit (10) angeordnet ist.

8. Vorrichtung nach Anspruch 7, **dadurch gekennzeichnet, dass** die Signalverarbeitungseinheit (10) als eine richtungserkennende 2-Kanal-Mischstufe ausgebildet ist.

9. Vorrichtung nach einem der Ansprüche 1 bis 8, **dadurch gekennzeichnet, dass** die Vorrichtung aus mindestens einem Radarsensor (6, 7, 8) und mindestens einem in oder auf der Fahrbahn (3) installierten Sensorkabel (19) besteht.

10. Vorrichtung nach einem der Ansprüche 1 bis 9, **dadurch gekennzeichnet, dass** der Radarsensor (6, 6a, 6b, 6') in einem Stellplatz (21) eines Parkplatzes (20) integriert ist.

11. Verfahren zum Erfassen von Verkehrsinformationen mit mindestens einer in der Fahrbahn (3) versenkt angeordneten Sensoreinrichtung, wobei die Sensoreinrichtung gegen den Unterboden (5) eines Fahrzeuges (1) gerichtet ist und als ein geschwindigkeits- und entfernungsmessender Radarsensor (6, 7, 8) ausgebildet ist, wobei der Radarsensor (6, 7, 8) die Geschwindigkeit des Fahrzeuges (1) detektiert, **dadurch gekennzeichnet, dass** zur zusätzlichen Erfassung des Fahrzeuges (1) der Radarsensor modulierte Signale aussendet und eine Entfernungsmessung zwischen dem Radarsensor und dem Fahrzeugunterboden (5) durchführt.

12. Verfahren nach Anspruch 11, **dadurch gekennzeichnet, dass** aus der Erfassung der Achspositionen eines Fahrzeuges (1) in Verbindung mit dem modulierten Radarsensor eine Fahrzeugklassifizierung des erfassten Fahrzeuges erfolgt.

13. Verfahren nach Anspruch 11, **dadurch gekennzeichnet, dass** sich das modulierte Signal an dem Unterboden (5) des darüber fahrenden Fahrzeuges (1) reflektiert und dadurch eine Klassifikation des Fahrzeuges (1) erreichbar ist.

14. Verfahren nach einem der Ansprüche 11 bis 13, **dadurch gekennzeichnet, dass** die Geschwindigkeit, die Länge, die statische Anwesenheit sowie die Klassifizierung eines Fahrzeuges erfassbar ist.

15. Verfahren nach einem der Ansprüche 11 bis 13, **dadurch gekennzeichnet, dass** durch die Entfernungsmessung die Bodenhöhe des Fahrzeuges (1) ermittelt und zur Klassifizierung verwendet wird.

## Claims

1. Apparatus for detecting traffic information having at least one sensor device countersunk in the road (3), wherein the sensor device is directed towards the undercarriage (5) of a vehicle (1) and designed as a speed- and distance-measuring radar sensor (6, 7, 8), wherein the radar sensor (6, 7, 8) detects the speed of the vehicle (1), **characterised in that** for additional detection of the vehicle (1) the radar sensor (6, 7, 8) emits modulated signals and carries out distance measurement between the radar sensor and the vehicle undercarriage (5).

2. Apparatus according to claim 1, **characterised in that** the apparatus is suitable for detecting the speed and/or length and/or static presence and/or direction of travel of a slowly moving or stationary vehicle.

3. Apparatus according to claim 1 or 2, **characterised in that** the sensor device is designed as a FMCW radar sensor (7).

4. Apparatus according to one of claims 1 to 3, **characterised in that** the radar sensor (7) is phase- and/or pulse- and/or frequency-modulated.

5. Apparatus according to one of claims 1 to 4, **characterised in that** the apparatus has a radar sensor (6, 7, 8) integrated in the road and in addition at least one distance sensor (16) arranged to the side of or above the vehicle.

6. Apparatus according to one of claims 1 to 5, **characterised in that** the sensor device consists of a combination of a CW radar sensor (8) and a FMCW radar sensor (7).

7. Apparatus according to one of claims 1 to 6, **characterised in that** a signal processing unit (10) is arranged in a housing (9).

8. Apparatus according to claim 7, **characterised in that** the signal processing unit 10) is designed as a direction-detecting two-channel mixer stage.

9. Apparatus according to one of claims 1 to 8, **characterised in that** the apparatus consists of at least one radar sensor (6, 7, 8) and at least one sensor cable (19) installed in or on the road (3).

10. Apparatus according to one of claims 1 to 9, **characterised in that** the radar sensor (6, 6a, 6b, 6') is integrated in a parking space (21) of a car park (20).

11. Method for detecting traffic information with at least one sensor device countersunk in the road (3), wherein the sensor device is directed towards the undercarriage (5) of a vehicle (1) and designed as a speed- and distance-measuring radar sensor (6, 7, 8), wherein the radar sensor (6, 7, 8) detects the speed of the vehicle (1), **characterised in that** for additional detection of the vehicle (1) the radar sensor emits modulated signals and carries out distance measurement between the radar sensor and the vehicle undercarriage (5).

12. Method according to claim 11, **characterised in that**, from detection of the axle positions of a vehicle (1) in conjunction with the modulated radar sensor, vehicle classification of the detected vehicle is effected.

13. Method according to claim 11, **characterised in that** the modulated signal is reflected on the undercarriage (5) of the vehicle (1) travelling thereabove and as a result a classification of the vehicle (1) can be achieved.

14. Method according to one of claims 11 to 13, **characterised in that** the speed, the length, the static presence and also the classification of a vehicle can be detected.

15. Method according to one of claims 11 to 13, **characterised in that**, as a result of the distance measurement, the ground clearance of the vehicle (1) is determined and used for classification.

## Revendications

1. Dispositif pour détecter des informations de circulation, avec au moins un dispositif à capteurs encastré dans la chaussée (3), le dispositif à capteurs étant dirigé vers le bas de caisse (5) d'un véhicule (1) et étant conçu comme un capteur radar (6, 7, 8) tachymètre et télémètre, le capteur radar (6, 7, 8) détectant la vitesse du véhicule (1), **caractérisé en ce que** le capteur radar (6, 7, 8), pour une détection supplémentaire du véhicule (1), émet des signaux modulés et procède à une télémétrie entre le capteur radar et le bas de caisse de véhicule (5).

2. Dispositif selon la revendication 1, **caractérisé en ce que** le dispositif est apte à détecter la vitesse et/ou la longueur et/ou la présence statique et/ou le sens de circulation d'un véhicule circulant lentement ou à l'arrêt.

3. Dispositif selon la revendication 1 ou 2, **caractérisé en ce que** le dispositif à capteurs est conçu comme un capteur radar à onde continue modulée en fréquence (FMCW).

4. Dispositif selon l'une des revendications 1 à 3, **caractérisé en ce que** le capteur radar (7) est modulé en phase et/ou en impulsion et/ou en fréquence.

5. Dispositif selon l'une des revendications 1 à 4, **caractérisé en ce que** le dispositif comporte un capteur radar (6, 7, 8) intégré dans la chaussée, et en supplément, sur le côté ou au-dessus du véhicule, au moins un capteur de distance (16).

6. Dispositif selon l'une des revendications 1 à 5, **caractérisé en ce que** le dispositif à capteurs se compose d'une combinaison d'un capteur radar à onde continue (8) et d'un capteur radar à onde continue modulée en fréquence (FMCW) (7).

7. Dispositif selon l'une des revendications 1 à 6, **caractérisé en ce qu'**une unité de traitement de signaux (10) est disposée dans un boîtier (9).

8. Dispositif selon la revendication 7, **caractérisé en ce que** l'unité de traitement de signaux (10) est conçue comme un étage mélangeur à 2 canaux à reconnaissance de direction.

9. Dispositif selon l'une des revendications 1 à 8, **caractérisé en ce que** le dispositif se compose d'au moins un capteur radar (6, 7, 8) et d'au moins un câble de capteur (19) installé dans ou sur la chaussée (3).

10. Dispositif selon l'une des revendications 1 à 9, **caractérisé en ce que** le capteur radar (6, 6a, 6b, 6') est intégré dans un emplacement (21) d'un parking (20).

11. Procédé pour détecter des informations de circulation, avec au moins un dispositif à capteurs encastré dans la chaussée (3), le dispositif à capteurs étant dirigé vers le bas de caisse (5) d'un véhicule (1) et étant conçu comme un capteur radar (6, 7, 8) tachymètre et télémètre, le capteur radar (6, 7, 8) détectant la vitesse du véhicule (1), **caractérisé en ce que** pour une détection supplémentaire du véhicule (1), le capteur radar émet des signaux modulés et procède à une télémétrie entre le capteur radar et le bas de caisse de véhicule (5).

12. Procédé selon la revendication 11, **caractérisé en ce qu'**à partir de la détection des positions d'essieux d'un véhicule (1), une classification du véhicule détecté a lieu en liaison avec le capteur radar modulé.

13. Procédé selon la revendication 11, **caractérisé en ce que** le signal modulé est réfléchi sur le bas de caisse (5) du véhicule (1) qui passe dessus, et une classification du véhicule (1) peut ainsi être obtenue.

14. Procédé selon l'une des revendications 11 à 13, **caractérisé en ce que** la vitesse, la longueur, la présence statique et la classification d'un véhicule peuvent être détectées.

15. Procédé selon l'une des revendications 11 à 13, **caractérisé en ce que** la télémétrie détermine la hauteur de caisse du véhicule (1) et est utilisée pour la classification.
